(19) Europäisches Patentamt
European Patent Office
Office européen des brevets

(11) EP 3 012 969 A1

(12) EUROPEAN PATENT APPLICATION
published in accordance with Art. 153(4) EPC

(43) Date of publication:
27.04.2016 Bulletin 2016/17

(51) Int Cl.:
H02S 10/00 (2014.01)     G06Q 50/06 (2012.01)
H02J 3/00 (2006.01)

(21) Application number: 13863669.1

(22) Date of filing: 25.12.2013

(86) International application number:
PCT/JP2013/084668

(87) International publication number:
WO 2014/203431 (24.12.2014 Gazette 2014/52)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 21.06.2013 JP 2013130380

(71) Applicant: Kabushiki Kaisha Toshiba
Minato-ku
Tokyo 105-8001 (JP)

(72) Inventors:
• MATSUE, Kiyotaka
Tokyo 105-8001 (JP)
• KUBOTA, Kazuto
Tokyo 105-8001 (JP)

• SUYAMA, Akihiro
Tokyo 105-8001 (JP)
• KATAYAMA, Kyosuke
Tokyo 105-8001 (JP)
• WADA, Takahisa
Tokyo 105-8001 (JP)
• YAMAGISHI, Masayuki
Tokyo 105-8001 (JP)
• EDAHIRO, Toshiaki
Tokyo 105-8001 (JP)

(74) Representative: Moreland, David et al
Marks & Clerk LLP
Aurora
120 Bothwell Street
Glasgow G2 7JS (GB)

(54) PREDICTION SYSTEM, PREDICTION DEVICE, AND PREDICTION METHOD

(57) According to an embodiment, an estimation system estimates the power generation amount of a photovoltaic power generation unit. The estimation system includes a calculation unit and a coefficient optimization unit. The calculation unit calculates the estimated value of the power generation amount from the estimated value of a solar irradiance based on a power generation coefficient that converts the solar irradiance into the power generation amount. The coefficient optimization unit adaptively changes the power generation coefficient.

FIG. 4

EP 3 012 969 A1

**Description**

Technical Field

Embodiments described herein relate generally to a technique of estimating the power generation amount of a PV apparatus (PV unit) including a PV (Photovoltaic power generation) panel.

Background Art

In a future smart energy society, the key point is to accurately estimate not only the demanded quantity of energy (energy demand) of each customer but also the energy production amount. Of the energy generation apparatuses, PV apparatuses are particularly popular, and various methods for estimating the power generation amount of the PV apparatus have been proposed.

For example, there is known a model (for example, Erbs model) used to obtain a total solar irradiance based on a global solar irradiance and the installation information of a PV panel. Also known is a method of converting an estimated global solar irradiance into a total solar irradiance and multiplying it by a power generation coefficient to estimate the power generation amount. A method of estimating the power generation amount based on the weather forecast, atmospheric temperature, humidity information, and the like of the estimation day is known as well. There is further known a method of searching past log data for patterns similar to the estimation day and estimating the power generation amount by pattern matching.

Citation List

Patent Literatures

Patent Literature 1: Jpn. Pat. Appln. KOKAI Publication No. 2012-124188
Patent Literature 2: Jpn. Pat. Appln. KOKAI Publication No. 2011-124287

Non-Patent Literatures

Non-Patent Literature 1: Erbs, et. al, "Estimation of the diffuse radiation fraction for hourly, daily, and monthly average global radiation", Solar Energy, Vol. 28, No. 4, pp. 293-302, 1982.

Summary of Invention

Technical Problem

In the known techniques, a similar pattern is extracted by pattern matching using time series data obtained from a wattmeter or pyrheliometer near the point of estimation, thereby estimating the power generation amount of the PV panel. For this reason, calculations with relatively heavy load are necessary. In addition, the power generation amount in the near future can only be estimated. There is also a method of specifying a portion shaded by the PV panel using three-dimensional map information and correcting the estimated power generation amount. However, aging degradation of the PV panel or the like cannot be taken into consideration.

Additionally, in the existing estimation techniques, data (for example, power generation efficiency) specific to each device (for example, PV unit or PV-PCS (Power Conditioning System)) needs to be used. A technique capable of accurately estimating the power generation amount by a uniform method without depending on the device or the maker thereof is needed.

It is an object to provide an estimation system capable of accurately estimating a power generation amount, an estimation apparatus, and an estimation method.

Solution to Problem

According to an aspect, an estimation system estimates the power generation amount of a photovoltaic power generation unit. The estimation system includes a calculation unit and a coefficient optimization unit. The calculation unit calculates the estimated value of the power generation amount from the estimated value of a solar irradiance based on a power generation coefficient that converts the solar irradiance into the power generation amount. The coefficient optimization unit adaptively changes the power generation coefficient.

Brief Description of Drawings

[FIG. 1] FIG. 1 is a view showing an example of an estimation system according to an embodiment.
[FIG. 2] FIG. 2 is a functional block diagram showing an example of an estimation server 132.
[FIG. 3] FIG. 3 is a view for explaining the function of a power generation amount calculation unit 213.
[FIG. 4] FIG. 4 is a view showing the relationship between the power generation amount calculation unit 213 and a coefficient optimization unit 214 according to the embodiment.
[FIG. 5] FIG. 5 is a functional block diagram showing an example of the coefficient optimization unit 214.
[FIG. 6] FIG. 6 is a view showing examples of a solar irradiance (actual value).
[FIG. 7] FIG. 7 is a view showing examples of a power generation amount (actual value).
[FIG. 8] FIG. 8 is a view showing examples of the peak value of the solar irradiance (actual value).
[FIG. 9] FIG. 9 is a view showing examples of the peak values of the solar irradiance and the power generation amount at each time.
[FIG. 10] FIG. 10 is a view showing an example of the time series of calculated power generation coefficients.
[FIG. 11] FIG. 11 is a view showing examples of PV parameters.
[FIG. 12] FIG. 12 is a view showing examples of solar irradiances (estimated values).
[FIG. 13] FIG. 13 is a view showing examples of the calculated power generation amount (estimated value) according to the first embodiment.
[FIG. 14] FIG. 14 is a view showing an example of the power generation coefficient (fixed value).
[FIG. 15] FIG. 15 is a functional block diagram showing another example of the coefficient optimization unit.
[FIG. 16] FIG. 16 is a functional block diagram showing an example of a sample optimization unit 615.
[FIG. 17] FIG. 17 is an activity diagram showing an example of the processing procedure of a coefficient optimization unit 611.
[FIG. 18] FIG. 18 is a functional block diagram showing another example of the coefficient optimization unit.
[FIG. 19] FIG. 19 is a functional block diagram showing an example of a correction unit 715.
[FIG. 20] FIG. 20 is a view showing examples of data stored in a power generation coefficient database 731.
[FIG. 21] FIG. 21 is a view showing examples of data stored in the power generation coefficient database 731.
Description of Embodiments

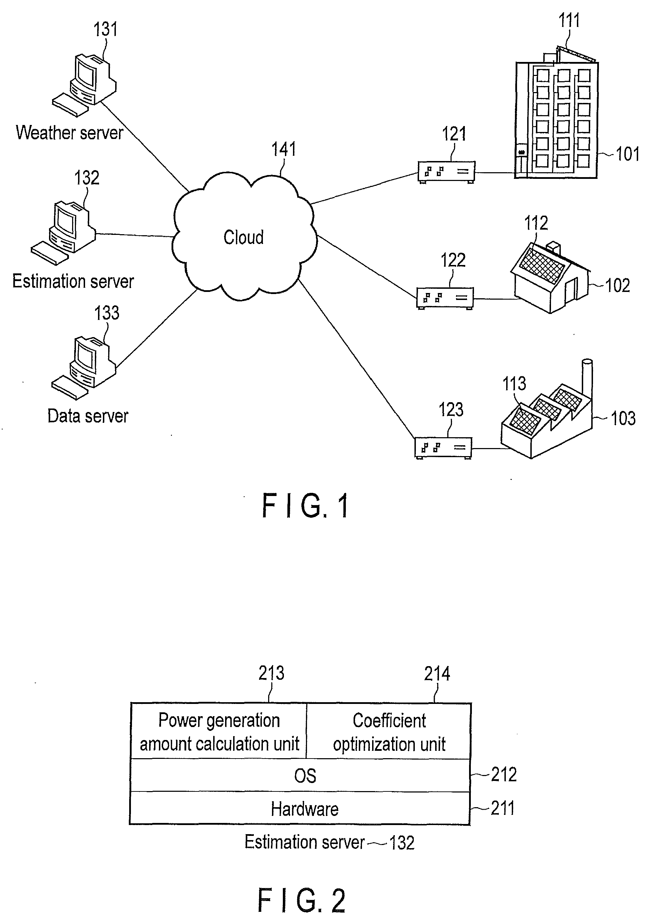

FIG. 1 is a view showing an example of an estimation system according to an embodiment. Referring to FIG. 1, an apartment house 101 includes a PV unit 111. A detached house (home) 102 includes a PV unit 112. A factory 103 includes a PV unit 113. Each PV unit is an energy generation apparatus including a PV panel that converts solar energy into power.
The apartment house 101 is connected to a cloud computing system (to be abbreviated as a cloud hereinafter) 141 via a local server 121. The home 102 and the factory 103 are also connected to the cloud 141 via local servers 122 and 123, respectively. The local server 121 measures the power generation amount (PV power generation amount) of the PV unit 111 of the apartment house 101. The obtained measured value is transmitted to the cloud 141 at an interval of, for example, 30 min. Similarly, the local server 122 transmits the power generation amount of the PV unit 112 (home 102) to the cloud 141, and the local server 123 transmits the power generation amount of the PV unit 113 (factory 103) to the cloud 141. As is known, the cloud 141 is a computer network.
The cloud 141 includes a weather server 131, an estimation server 132, and a data server 133. The data server 133 stores the measured values of the PV power generation amounts transmitted from the local servers 121, 122, and 123. The data server 133 also stores the measured value of a daily solar irradiance over a span of, for example, one year or 10 years. The measured value of the solar irradiance may be given by the weather server 131, or obtained from the local servers 121, 122, and 123. The measurement can be done, for example, on a minute-by-minute basis or hourly (i.e., at 0 minutes).
The weather server 131 distributes weather information, weather estimation data, wind velocity data, and the like (to be generically referred to as weather data hereinafter) to the cloud 141. The weather data is provided by the Meteorological Agency, weather company, or the like.
The estimation server 132 estimates the power generation amounts of the PV units 111, 112, and 113 based on the weather data, the measured values of the PV power generation amounts stored in the data server 133, and the like. In the embodiment, this processing will be described in detail.
A future value to be estimated will be referred to as an estimated value, and a past value as an actual value hereinafter. The estimated value and the actual value are thus discriminated. The measured values of the PV power generation amounts and various kinds of data stored in the data server 133 are actual values.

Note that protocols such as ECHONET®, ECHONET Lite®, ZigBEE®, Z-wave®, and KNX® are usable in the above-described system. In a lower layer, a wired LAN such as Ethernet®, power line communication, wireless LAN, Bluetooth®, or a protocol for a cellular phone such as 3G or 4G can be used. These protocols are applicable to communication between a local server and a customer (and electrical apparatuses thereof) or between a local server and the cloud 141.

FIG. 2 is a functional block diagram showing an example of the estimation server 132. The estimation server 132 includes hardware 211 including a CPU (Central Processing Unit) and a memory, and an OS (Operation System) 212 that operates on the hardware 211. In addition, a power generation amount calculation unit 213 and a coefficient optimization unit 214, which are software modules, function on the OS 212, thereby implementing the function of the estimation server 132. In this way, the estimation server 132 can be implemented as a computer. The function of the estimation server 132 can also be implemented using the virtual server function of the cloud 141.

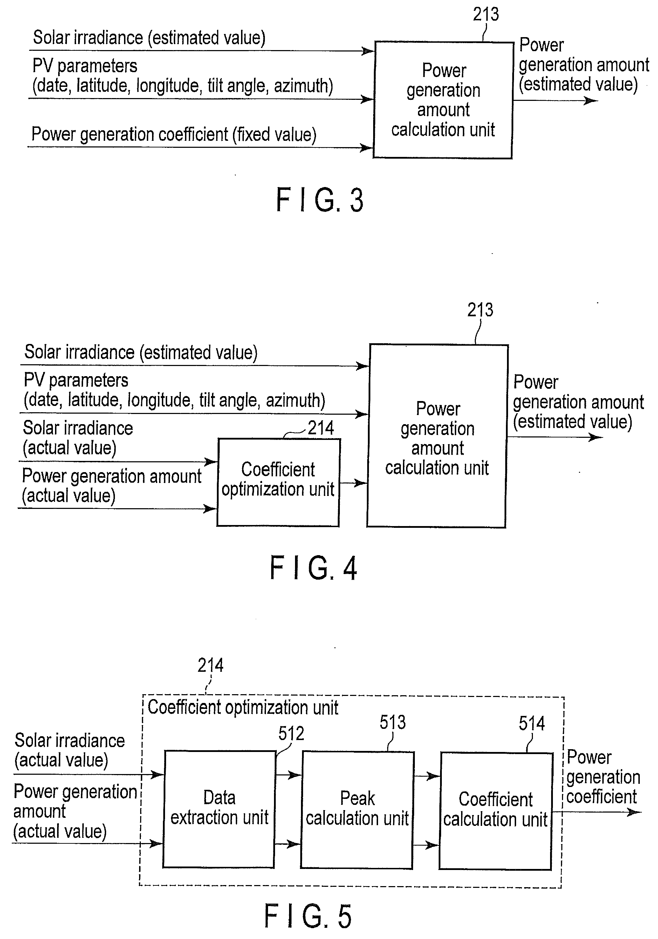

FIG. 3 is a view for explaining the function of the power generation amount calculation unit 213. The power generation amount calculation unit 213 calculates the PV power generation amount (estimated value) of a PV unit as a calculation target based on a solar irradiance (estimated value), PV parameters, and power generation coefficient (fixed value). The solar irradiance (estimated value) is the estimated value of the solar irradiance at or near the point of installation of the PV unit. The solar irradiance (estimated value) is provided by the Meteorological Agency, weather company, or the like. However, the solar irradiance (estimated value) is represented by a global solar irradiance and therefore converted into a total solar irradiance using PV parameters.

The PV parameters include information representing the features of the PV unit. The PV parameters are pieces of information that characterize the PV unit; for example, the installation position (latitude and longitude) and the installation orientation (tilt angle and azimuth) of the PV panel. Information such as the date (estimation day) on which the power generation amount should be estimated may be included in the PV parameters. By using the PV parameters, a total solar irradiance can be calculated from a global solar irradiance based on, for example, an Erbs model. The power generation amount (estimated value) can be calculated by multiplying the total solar irradiance by a power generation coefficient including an element such as a power generation efficiency.

In the existing techniques, however, since the value of the power generation coefficient is a fixed value, it is impossible to follow a change in the power generation amount caused by, for example, aging degradation. In the embodiment, the value of the power generation coefficient can adaptively be changed. That is, the value of the power generation coefficient can be changed to an appropriate value. Details will be described below.

FIG. 4 is a view showing the relationship between the power generation amount calculation unit 213 and the coefficient optimization unit 214 according to the embodiment. That is, in the embodiment, the solar irradiance (actual value) and the power generation amount (actual value) of the PV unit are input to the coefficient optimization unit 214. The coefficient optimization unit 214 optimizes the power generation coefficient based on the solar irradiance (actual value) and the power generation amount (actual value) of the PV unit, and outputs the optimized power generation coefficient.

The power generation coefficient output from the coefficient optimization unit 214 is given to the power generation amount calculation unit 213 together with the solar irradiance (estimated value) and the PV parameters. The power generation amount calculation unit 213 converts the solar irradiance (estimated value) into a total solar irradiance based on the PV parameters, and multiplies the total solar irradiance by the optimized power generation coefficient, thereby calculating the power generation amount (estimated value). A plurality of embodiments of the coefficient optimization unit 214 will be described next.

[First Embodiment]

FIG. 5 is a functional block diagram showing an example of a coefficient optimization unit 214. The coefficient optimization unit 214 includes a data extraction unit 512, a peak calculation unit 513, and a coefficient calculation unit 514.

The data extraction unit 512 acquires the solar irradiance (actual value) and the power generation amount (actual value) of the PV unit from a data server 133 (FIG. 1). The data extraction unit 512 extracts samples of the past N days from the acquired solar irradiance (actual value) and power generation amount (actual value). The number N of extraction days is a natural number, and the value (number of days) is set to, for example, 7, 14, 28, 60, 90, 180, or 365.

The extracted samples are transferred to the peak calculation unit 513. The peak calculation unit 513 calculates the peak value in each time zone or on the hour from the data of the solar irradiance (actual value) of the past N days. The peak calculation unit 513 also calculates the peak value in each time zone or on the hour from the data of the power generation amount (actual value) of the past N days. The obtained peak value of the solar irradiance (actual value) and the peak value of the power generation amount (actual value) are transferred to the coefficient calculation unit 514.

Note that the peak value is calculated mainly to remove noise components. When data of a large value is used as a sample, noise only has a slight effect. Hence, the coefficient calculation unit 514 can calculate an accurate value.

The coefficient calculation unit 514 calculates the power generation coefficient by proportional calculation. That is, the coefficient calculation unit 514 divides the peak value of the power generation amount (actual value) by the peak value of the solar irradiance (actual value), thereby calculating the power generation coefficient. In the embodiment, the power generation coefficient is calculated at an interval of, for example, 10 min.

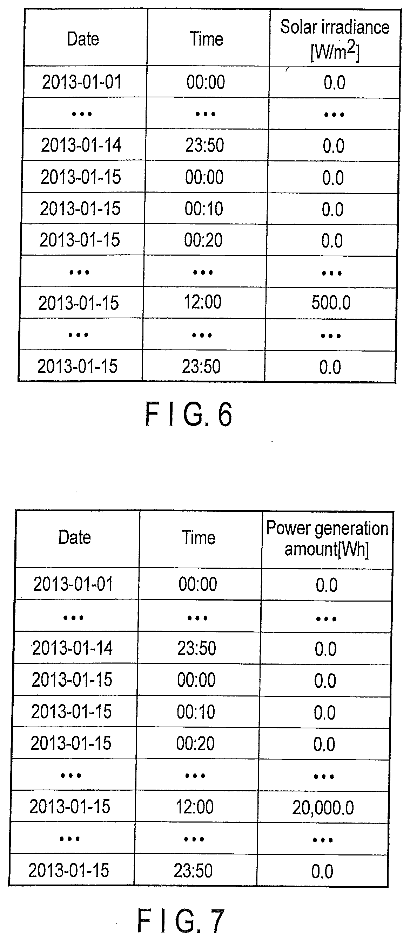

FIG. 6 is a view showing examples of the solar irradiance (actual value). FIG. 7 is a view showing examples of the power generation amount (actual value). Both values are stored in the data server 133 (FIG. 1). FIGS. 6 and 7 show values at 10-minute intervals from 0:00 on January 1, 2013 to 23:50 on January 15, 2013.

Assume that the estimation day is set to January 16, 2013, and the power generation amount for 24 hrs of the day is estimated. The data extraction unit 512 extracts data of the past N days previous to the estimation day. For example, when acquiring data of the past seven days (N = 7), the data extraction unit 512 extracts, as samples, data from 0:00 on January 9, 2013 to 23:50 on January 15, 2013.

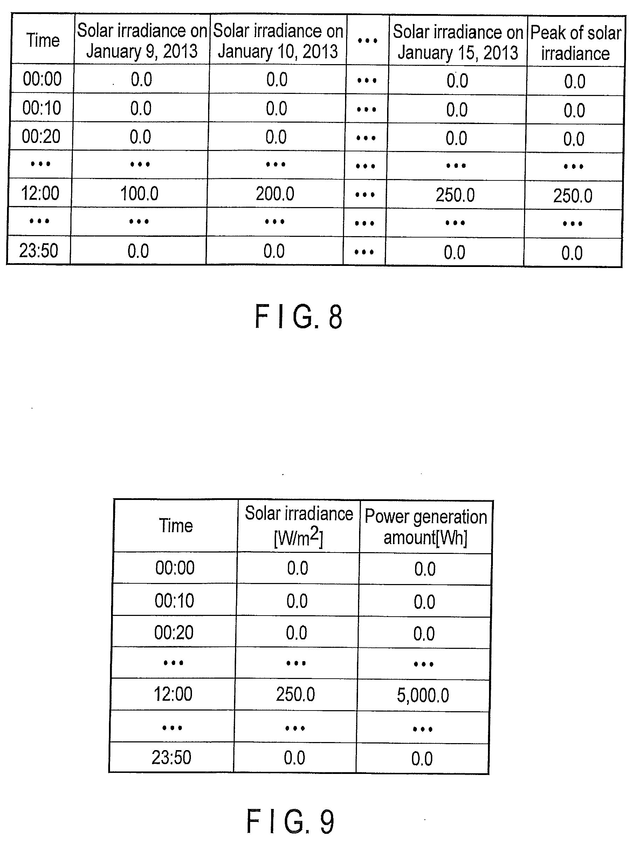

The peak calculation unit 513 obtains the peak value in each time (time zone) from the extracted past data. There are 144 pieces of data from 0:00 to 23:50 on January 9, 2013. As shown in FIG. 8, for the solar irradiance, the peak value at each time is extracted from the data of the seven days. The peak value at, for example, 12:00 is 250.0 on January 15, 2013. Similarly, for the power generation amount, the peak value at each time is extracted from the data of the seven days. FIG. 9 shows examples of the peak values of the solar irradiance and the power generation amount at each time.

The coefficient calculation unit 514 divides the peak value of the power generation amount calculated by the peak calculation unit 513 by the peak value of the solar irradiance, thereby calculating the time series of the power generation coefficient. That is, a power generation coefficient (t) at time t is calculated by equation (1).

$$\text{power generation coefficient (t)} = \text{power generation amount peak value (t)} \div \text{solar irradiance peak value (t)} \quad \ldots (1)$$

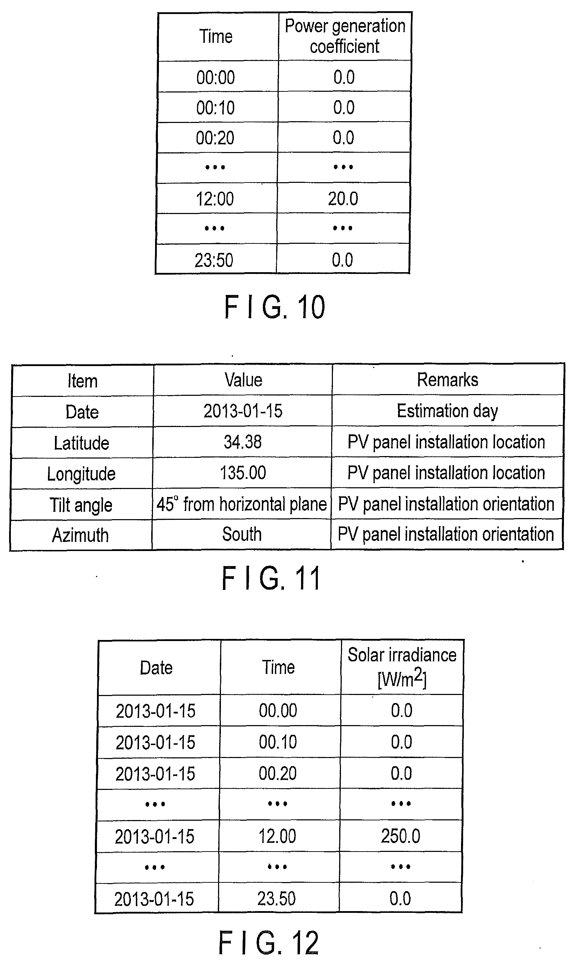

FIG. 10 shows examples of power generation coefficients calculated using equation (1). Note that since 0 ÷ 0 is an undefined value, 0.0 is defined in advance as the value of the power generation coefficient in such a case.

The power generation amount calculation unit 213 converts the solar irradiance (estimated value) into a power generation amount (estimated value) using the PV parameters and the power generation coefficient calculated by the coefficient calculation unit 514. As illustrated in FIG. 11, the PV parameters include the date of the estimation day, information about the installation location of the PV panel (latitude and longitude), and information about the installation orientation of the PV panel (tilt angle and azimuth).

FIG. 12 is a view showing examples of solar irradiances (estimated values) provided by the Meteorological Agency, weather company, or the like. FIG. 12 shows, as an example, the solar irradiances (estimated values) from 0:00 to 23:50 on January 15, 2013. Normally, data of this type is given as a global solar irradiance and therefore needs to be converted into a total solar irradiance using the PV parameters (FIG. 11). As a method of calculating the total solar irradiance from the global solar irradiance, an Erbs model and the like have been proposed. When the total solar irradiance is obtained, the power generation amount can be obtained using the power generation coefficient.

In the embodiment, using the time series of the power generation coefficient (t) calculated by the coefficient optimization unit 214, the time series of the power generation amount (estimated value) (t) is calculated by, for example, equation (2).

$$\text{power generation amount (estimated value) (t)} = \text{total solar irradiance (t)} \times \text{power generation coefficient (t)} \quad \ldots (2)$$

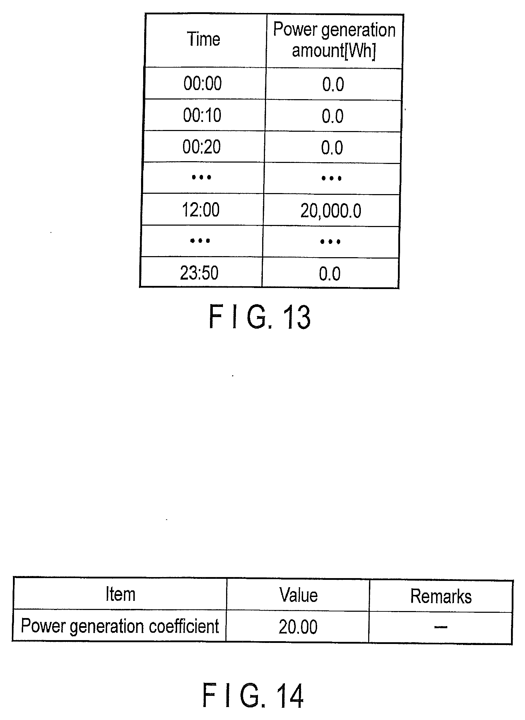

FIG. 13 shows examples of the calculated power generation amount (estimated value).

As described above, according to the first embodiment, the power generation coefficient is not fixed and is adaptively changed based on the actual values of the power generation amount and the solar irradiance.

In the existing techniques, the power generation coefficient is a fixed value, as shown in, for example, FIG. 14, and the time series of the estimated value of the power generation amount is calculated based on equation (3).

```
power generation amount (estimated value) (t) = total

solar irradiance (t) × power generation coefficient (fixed

value)                                            ...(3)
```

For this reason, a change in the power generation efficiency of the PV panel or the like cannot be reflected, and the power generation amount estimation accuracy gradually lowers. It is also impossible to follow not only a time-rate change in the characteristic but also an environmental change at the installation location.

On the other hand, in the first embodiment, the power generation coefficient of the estimation day is calculated using the solar irradiance (estimated value) at the PV unit installation location and the solar irradiance (actual value) and power generation amount data (actual value) in the past. The estimated value of the power generation amount in the estimation day is calculated based on the calculated power generation coefficient. Since this makes it possible to use the power generation coefficient that always reflects the latest state, the influence of aging degradation and the like can be eliminated. Furthermore, the estimated value of the power generation amount can be calculated by a uniform method without depending on data unique to a device such as a PV unit or PV-PCS. Additionally, the power generation amount can be estimated while reflecting a temporary decease in the power generation amount caused by a shadow on the PV unit or the like.

Hence, the power generation amount of the PV unit can accurately be estimated. This makes it possible, by extension, to improve the accuracy of the operation schedule of an electrical apparatus, including optimum charge and discharge control of a storage battery, and promote reduction of the $CO_2$ output and the heat and electricity cost.

[Second Embodiment]

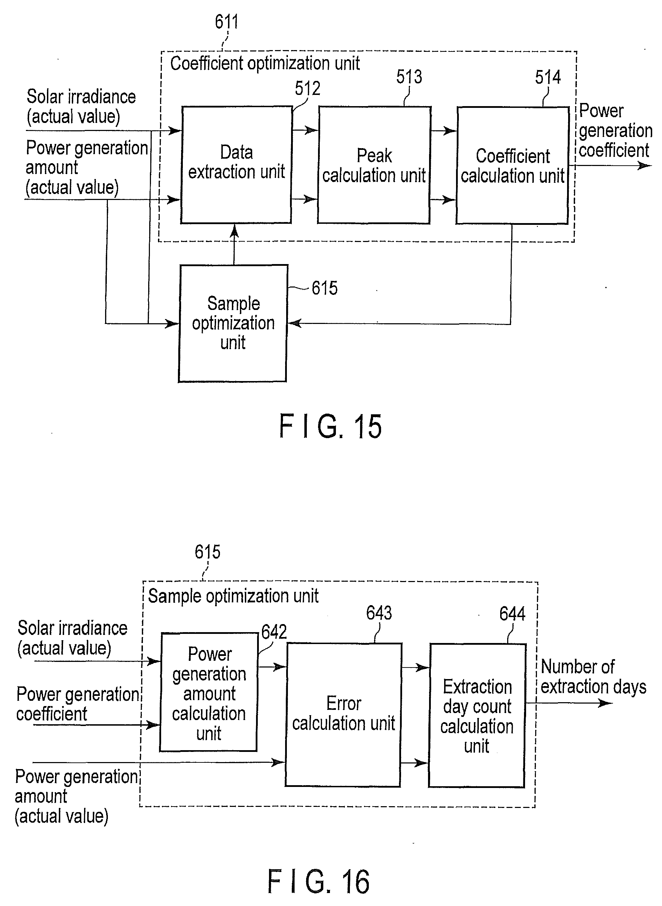

FIG. 15 is a functional block diagram showing another example of the coefficient optimization unit. For the sake of distinction, a coefficient optimization unit in FIG. 15 is denoted by 611. The same reference numerals as in FIG. 5 denote the same parts in FIG. 15.

The coefficient optimization unit 611 includes a sample optimization unit 615. The sample optimization unit 615 calculates the value of the number N of extraction days to obtain an accurate power generation amount (estimated value). That is, in the second embodiment, the value of the number N of extraction days is adaptively changed to minimize an error. In the first embodiment, the value of the number N of extraction days is fixed, and the number of data extracted by the data extraction unit 512 is a fixed value. In the second embodiment, the number of pieces of data is changeable, and the number is optimized.

The sample optimization unit 615 shown in FIG. 15 acquires the solar irradiance (actual value), the power generation amount (actual value), and the calculated power generation coefficient.

FIG. 16 is a functional block diagram showing an example of the sample optimization unit 615. The sample optimization unit 615 includes a power generation amount calculation unit 642, an error calculation unit 643, and an extraction day count calculation unit 644. The power generation amount calculation unit 642 calculates the power generation amount based on the solar irradiance (actual value) and the power generation coefficient. The error calculation unit 643 calculates the error between the power generation amount calculated by the power generation amount calculation unit 642 and the power generation amount (actual value) acquired from a data server 133. The extraction day count calculation unit 644 calculates the number N of extraction days that minimizes the error.

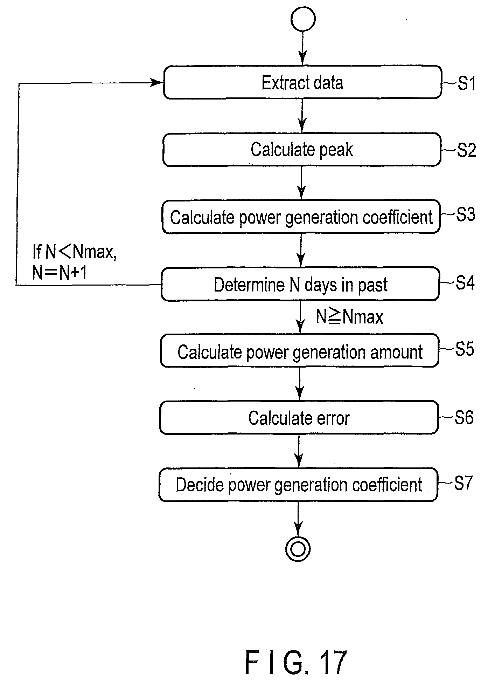

FIG. 17 is an activity diagram showing an example of the processing procedure of the coefficient optimization unit 611. A data extraction unit 512 of the coefficient optimization unit 611 acquires data of the solar irradiance (actual value) and power generation amount (actual value) of the past N days from the data server 133 (step S1). Next, a peak calculation unit 513 calculates the peak value of the solar irradiance and the peak value of the power generation amount in each time zone from the data acquired by the data extraction unit 512 (step S2). A coefficient calculation unit 514 divides the peak value of the power generation amount by the peak value of the solar irradiance (peak value of power generation amount ÷ peak value of solar irradiance), thereby calculating the time series of the power generation coefficient (step S3).

In the second embodiment, past N day determination processing is executed next (step S4). That is, the processes of steps S1 to S3 are repeated while incrementing the value N until the natural number N changes from 1 to a maximum value Nmax. If N is smaller than Nmax, the processing procedure returns to step S1, and the procedure of obtaining the power generation coefficient is repeated from the beginning. With the above-described procedure, power generation coefficients of the Nmax days are calculated.

When the power generation coefficients of the Nmax days are obtained (N ≥ Nmax), processing of calculating the power generation amount is executed (step S5). That is, a separately acquired solar irradiance (estimated value) is converted into the total solar irradiance by an Erbs model, and the total solar irradiance is multiplied by the power generation coefficient to obtain the power generation amount. However, since the power generation coefficients of the Nmax days are calculated, the power generation amounts are also calculated for the Nmax days. Since the power generation amounts calculated in this step are temporary values, they will be referred to as temporary power generation amounts.

When the temporary power generation amounts of the Nmax days are obtained, error calculation processing is executed (step S6). In this step, the error calculation unit 643 obtains the error between the temporary power generation amount and the acquired power generation amount (actual value) by equation (4).

$$\mathrm{error} = \Sigma\{\text{temporary power generation amount} - \text{power generation amount (actual value)}\}^2 \qquad ...(4)$$

In equation (4), $\Sigma$ is the sum for time t, and addition for 24 hrs is performed. That is, a value obtained by squaring the difference between the temporary power generation amount and the power generation amount (actual value) in each time zone is added over one day, and Nmax error data are obtained. Next, based on the Nmax error data, the extraction day count calculation unit 644 decides the number N of days that minimizes the error. Power generation coefficient decision processing is executed based on the actual value data of the decided N days (step S7).

As described above, in the second embodiment, the number of samples of solar irradiances (actual values) and power generation amounts (actual values) associated with calculation of power generation coefficients is optimized. That is, the number N of days to extract data from the data server 133 is optimized. More specifically, the error between the power generation amount (actual value) and the estimated value of the power generation amount based on the calculated power generation coefficient is calculated from N = 1 to Nmax, and the optimum number N of extraction days that minimizes the error is found.

For example, assume that it continued raining for three days immediately before the estimation day. At this time, if the value N is fixed to N = 3, the power generation coefficient needs to be calculated based on only the data of the rainy days, and the accuracy lowers. This is because only values close to 0 are obtained as the solar irradiance (actual value) and the power generation amount (actual value).

To prevent this, in the second embodiment, N is made variable so that, for example, N = 7 can also be obtained. This makes it possible to calculate the power generation coefficient in consideration of not only the data of rainy days but also the data of sunny days and further improve the power generation amount estimation accuracy.

[Third Embodiment]

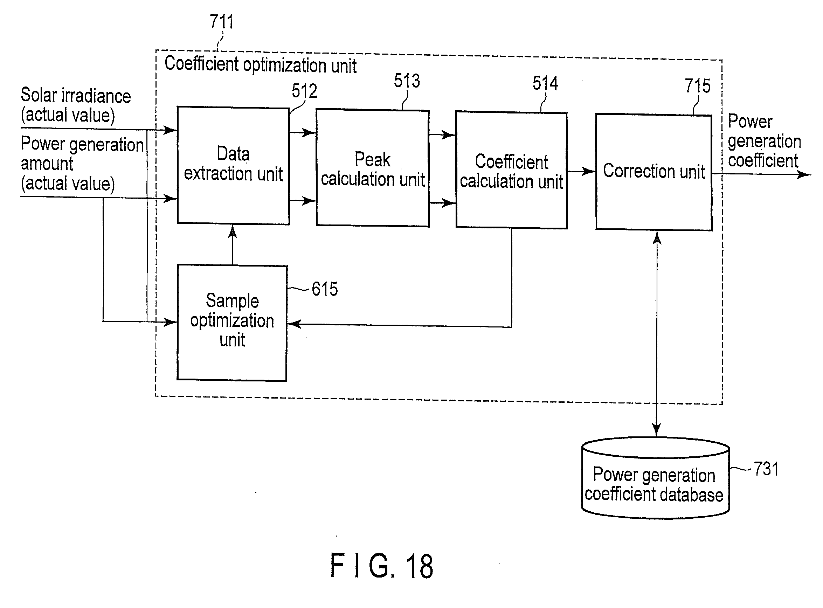

FIG. 18 is a functional block diagram showing another example of the coefficient optimization unit. For the sake of distinction, a coefficient optimization unit is denoted by 711. The same reference numerals as in FIG. 15 denote the same parts in FIG. 18. In the third embodiment, processing of further correcting a calculated power generation coefficient will be described.

Referring to FIG. 18, the power generation coefficient calculated by a coefficient calculation unit 514 is input to a correction unit 715. The correction unit 715 corrects the power generation coefficient using data stored in a power generation coefficient database 731. Note that correction may be unnecessary depending on the value of the power generation coefficient.

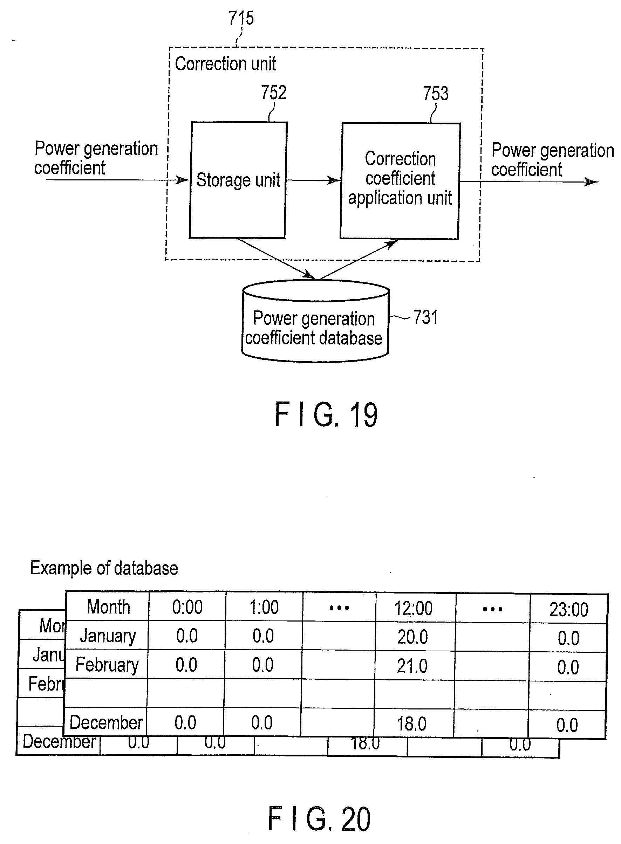

FIG. 19 is a functional block diagram showing an example of the correction unit 715. The correction unit 715 includes a storage unit 752 and a correction coefficient application unit 753. The storage unit 752 stores, in the power generation coefficient database 731, the power generation coefficient transferred from the coefficient calculation unit 514. The correction coefficient application unit 753 corrects the power generation coefficient transferred from the coefficient calculation unit 514 using a past power generation coefficient in the power generation coefficient database 731. The corrected power generation coefficient is transferred to a power generation amount calculation unit 213.

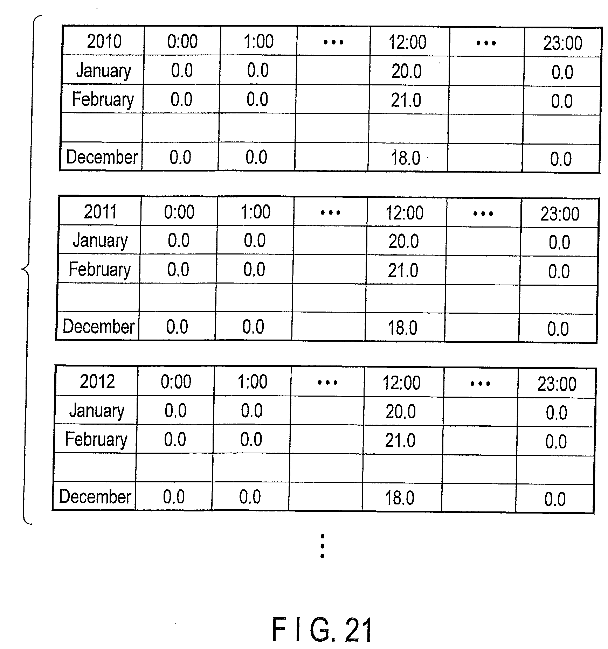

FIGS. 20 and 21 show examples of data stored in the power generation coefficient database 731. For example, the database shown in FIG. 20 records values obtained by averaging the values of power generation coefficients at one-hour intervals on a monthly basis. The power generation coefficient database 731 may be recorded by year, as shown in, for example, FIG. 21. The storage unit 752 stores the thus calculated power generation coefficients in the power generation coefficient database 731.

The correction coefficient application unit 753 corrects the power generation coefficient using, for example, an exponential moving average method to suppress an abrupt change of the power generation coefficient. The correction coefficient application unit 753 calculates the power generation coefficient (t) as the time series of the power generation coefficient after correction based on, for example, equation (5). The power generation coefficient (t, T) indicates power generation coefficient data at the time t T months before of the power generation coefficients stored in the power generation coefficient database 731.

$$\text{power generation coefficient (t)} = \Sigma(\text{ power generation coefficient (t, T)} \times \text{correction coefficient (T)}) \quad ...(5)$$

In equation (5), $\Sigma$ is the sum for T. The correction coefficient (T) in equation (5) is a weight coefficient applied to the data T months before. According to the exponential moving average method, the correction coefficient (T) exponentially decreases as T becomes large, that is, as the time goes back to the past. When T is small, that is, for immediately preceding data, the correction coefficient (T) takes a relatively large value.

In the third embodiment, the power generation coefficient calculated by the coefficient calculation unit 514 is corrected by the exponential moving average method using, for example, a date as a reference. That is, the power generation coefficient is corrected by averaging such that the immediately preceding data is weighted heavily, and the weight is made small as the time goes back to the past, thereby suppressing an abrupt change of the power generation coefficient. This can suppress an excessive change in the estimated value of the power generation amount caused by, for example, an abrupt change of the weather. That is, it is possible to estimate the power generation amount without excessively reacting to the latest abrupt change of the weather or the like.

Note that the present invention is not limited to the above-described embodiments. For example, in the embodiments, photovoltaic power generation has been described. However, the present invention is also applicable to solar thermal power generation. In the above description, the power generation amount is calculated from the solar irradiance. However, the power generation amount can also be calculated from the solar irradiation. That is, the same discussion as described above holds even if solar irradiance is replaced by solar irradiation.

In the embodiments, the power generation coefficient is calculated using data of the past N days previous to the estimation day. As the value N, not only an arbitrary natural number but also, for example, 7, 14, 28, 60, 90, 180, or 365 can be assumed. Alternatively, one year may be divided on a monthly, seasonal, or yearly basis, and data over the period may be extracted. The extraction period may be decided based on a concept that the power generation coefficient changes little in the same month or same season.

Alternatively, the intervals of sunny days may be checked based on past weather data, and the power generation amount (actual value) and the solar irradiance (actual value) during the longest interval may be extracted as samples. The number of days from the estimation day to the immediately preceding sunny day may be employed, and an optimum solution may be calculated every time estimation processing is performed. Data of a sunny day may be extracted at random as sample data.

In the third embodiment, a case has been described in which the power generation coefficient is corrected using monthly data. However, the present invention is not limited to this. The power generation coefficient can be corrected by various methods, for example, by applying daily data, seasonal data of three months or the like, or data of the same months of past years. Instead of the exponential moving average method, a simple moving average method may be used. A weighted moving average method using a weight coefficient that decreases not exponentially but linearly with respect to T is also usable.

While certain embodiments of the invention have been described, these embodiments have been presented by way of example only, and are not intended to limit the scope of the inventions. Indeed, the novel methods and systems described herein may be embodied in a variety of other forms; furthermore, various omissions, substitutions and changes may be made without departing from the spirit of the invention. The accompanying claims and their equivalents are intended to cover the embodiments and modifications thereof as would fall within the scope and spirit of the inventions.

## Claims

1. An estimation system for estimating a power generation amount of a photovoltaic power generation unit, **characterized by** comprising:

   a calculation unit configured to calculate an estimated value of the power generation amount from the estimated value of a solar irradiance based on a power generation coefficient that converts the solar irradiance into the power generation amount; and
   a coefficient optimization unit configured to adaptively change the power generation coefficient.

**2.** The estimation system according to claim 1, **characterized in that** the calculation unit
calculates the estimated value of a total solar irradiance from the estimated value of a global solar irradiance based on a parameter that characterizes the photovoltaic power generation unit, and
calculates the estimated value of the power generation amount by multiplying the estimated value of the total solar irradiance by the power generation coefficient.

**3.** The estimation system according to claim 1, **characterized by** further comprising a database configured to store an actual value of the solar irradiance and the actual value of the power generation amount,
wherein the coefficient optimization unit comprises:

an extraction unit configured to extract a sample of the actual value of the solar irradiance and the sample of the actual value of the power generation amount from the database; and
a coefficient calculation unit configured to calculate the power generation coefficient based on a ratio of the extracted sample of the actual value of the power generation amount to the sample of the actual value of the solar irradiance.

**4.** The estimation system according to claim 3, **characterized in that** the extraction unit extracts the samples of the actual value of the solar irradiance and the actual value of the power generation amount over a predetermined number of past days previous to an estimation day.

**5.** The estimation system according to claim 4, **characterized by** further comprising a sample optimization unit configured to optimize the number of days.

**6.** The estimation system according to claim 5, **characterized in that** the sample optimization unit comprises:

an error calculation unit configured to calculate an error based on a difference between the power generation amount calculated by the calculation unit and the actual value of the power generation amount; and
a day count calculation unit configured to optimize the number of days so as to minimize the calculated error.

**7.** The estimation system according to claim 3, **characterized in that** the coefficient optimization unit further comprises a correction unit configured to correct the calculated power generation coefficient.

**8.** The estimation system according to claim 7, **characterized in that** the correction unit corrects the calculated power generation coefficient using an exponential moving average method for a power generation coefficient calculated in the past.

**9.** The estimation system according to claim 7, **characterized in that** the correction unit corrects the calculated power generation coefficient using a simple moving average method for a power generation coefficient calculated in the past.

**10.** The estimation system according to claim 7, **characterized in that** the correction unit corrects the calculated power generation coefficient using a weighted moving average method of linearly weighting a power generation coefficient calculated in the past.

**11.** An estimation apparatus for estimating a power generation amount of a photovoltaic power generation unit, **characterized by** comprising:

an acquisition unit configured to acquire an estimated value of a solar irradiance from a computer network;
a calculation unit configured to calculate the estimated value of the power generation amount from the estimated value of the solar irradiance based on a power generation coefficient that converts the solar irradiance into the power generation amount; and
a coefficient optimization unit configured to adaptively change the power generation coefficient.

**12.** The estimation apparatus according to claim 11, **characterized in that** the calculation unit
calculates the estimated value of a total solar irradiance from the estimated value of a global solar irradiance based on a parameter that characterizes the photovoltaic power generation unit, and
calculates the estimated value of the power generation amount by multiplying the estimated value of the total solar irradiance by the power generation coefficient.

13. The estimation apparatus according to claim 11, **characterized in that** the coefficient optimization unit comprises:

> an extraction unit configured to extract a sample of an actual value of the solar irradiance and the sample of the actual value of the power generation amount from a database of the computer network configured to store the actual value of the solar irradiance and the actual value of the power generation amount; and
> a coefficient calculation unit configured to calculate the power generation coefficient based on a ratio of the extracted sample of the actual value of the power generation amount to the sample of the actual value of the solar irradiance.

14. An estimation method of estimating a power generation amount of a photovoltaic power generation unit, **characterized by** comprising:

> calculating an estimated value of the power generation amount from the estimated value of a solar irradiance based on a power generation coefficient that converts the solar irradiance into the power generation amount; and
> adaptively changing the power generation coefficient.

15. The estimation method according to claim 14, **characterized in that** the calculating comprises:

> calculating the estimated value of a total solar irradiance from the estimated value of a global solar irradiance based on a parameter that characterizes the photovoltaic power generation unit, and
> calculating the estimated value of the power generation amount by multiplying the estimated value of the total solar irradiance by the power generation coefficient.

16. The estimation method according to claim 14, **characterized in that** the changing comprises:

> extracting a sample of an actual value of the solar irradiance and the sample of the actual value of the power generation amount from a database of a computer network configured to store the actual value of the solar irradiance and the actual value of the power generation amount; and
> calculating the power generation coefficient based on a ratio of the extracted sample of the actual value of the power generation amount to the sample of the actual value of the solar irradiance.

17. The estimation method according to claim 16, **characterized in that** the extracting comprises extracting the samples of the actual value of the solar irradiance and the actual value of the power generation amount over a predetermined number of past days previous to an estimation day.

18. The estimation method according to claim 17, **characterized by** further comprising optimizing the number of days.

19. The estimation method according to claim 18, **characterized in that** the optimizing the number of days comprises:

> calculating an error based on a difference between the power generation amount calculated by the calculation unit and the actual value of the power generation amount; and
> optimizing the number of days so as to minimize the calculated error.

20. The estimation method according to claim 16, **characterized by** further comprising correcting the calculated power generation coefficient.

21. The estimation method according to claim 20, **characterized in that** the correcting comprises correcting the calculated power generation coefficient using an exponential moving average method for a power generation coefficient calculated in the past.

22. The estimation method according to claim 20, **characterized in that** the correcting comprises correcting the calculated power generation coefficient using a simple moving average method for a power generation coefficient calculated in the past.

23. The estimation method according to claim 20, **characterized in that** the correcting comprises correcting the calculated power generation coefficient using a weighted moving average method of linearly weighting a power generation coefficient calculated in the past.

131

Weather server

132

Estimation server

133

Data server

141

Cloud

121

111

101

122

112

102

123

113

103

# F I G. 1

213

214

| Power generation amount calculation unit | Coefficient optimization unit |
|---|---|
| OS | |
| Hardware | |

212

211

Estimation server ～132

# F I G. 2

213

Solar irradiance (estimated value)

PV parameters
(date, latitude, longitude, tilt angle, azimuth)

Power generation coefficient (fixed value)

→ Power generation amount calculation unit →

Power
generation amount
(estimated value)

F I G. 3

213

Solar irradiance (estimated value)

PV parameters
(date, latitude, longitude, tilt angle, azimuth)

Solar irradiance
(actual value)

214

Power generation amount
(actual value)

→ Coefficient optimization unit →

→ Power generation amount calculation unit →

Power
generation amount
(estimated value)

F I G. 4

214

Coefficient optimization unit

Solar irradiance
(actual value)

Power generation
amount
(actual value)

512

→ Data extraction unit →

513

→ Peak calculation unit →

514

→ Coefficient calculation unit →

Power
generation
coefficient

F I G. 5

| Date | Time | Solar irradiance [W/m²] |
|---|---|---|
| 2013-01-01 | 00:00 | 0.0 |
| ••• | ••• | ••• |
| 2013-01-14 | 23:50 | 0.0 |
| 2013-01-15 | 00:00 | 0.0 |
| 2013-01-15 | 00:10 | 0.0 |
| 2013-01-15 | 00:20 | 0.0 |
| ••• | ••• | ••• |
| 2013-01-15 | 12:00 | 500.0 |
| ••• | ••• | ••• |
| 2013-01-15 | 23:50 | 0.0 |

# F I G. 6

| Date | Time | Power generation amount[Wh] |
|---|---|---|
| 2013-01-01 | 00:00 | 0.0 |
| ••• | ••• | ••• |
| 2013-01-14 | 23:50 | 0.0 |
| 2013-01-15 | 00:00 | 0.0 |
| 2013-01-15 | 00:10 | 0.0 |
| 2013-01-15 | 00:20 | 0.0 |
| ••• | ••• | ••• |
| 2013-01-15 | 12:00 | 20,000.0 |
| ••• | ••• | ••• |
| 2013-01-15 | 23:50 | 0.0 |

# F I G. 7

| Time | Solar irradiance on January 9, 2013 | Solar irradiance on January 10, 2013 | ... | Solar irradiance on January 15, 2013 | Peak of solar irradiance |
|------|------|------|------|------|------|
| 00:00 | 0.0 | 0.0 | ... | 0.0 | 0.0 |
| 00:10 | 0.0 | 0.0 | ... | 0.0 | 0.0 |
| 00:20 | 0.0 | 0.0 | ... | 0.0 | 0.0 |
| ... | ... | ... | ... | ... | ... |
| 12:00 | 100.0 | 200.0 | ... | 250.0 | 250.0 |
| ... | ... | ... | ... | ... | ... |
| 23:50 | 0.0 | 0.0 | ... | 0.0 | 0.0 |

# FIG. 8

| Time | Solar irradiance [W/m$^2$] | Power generation amount[Wh] |
|------|------|------|
| 00:00 | 0.0 | 0.0 |
| 00:10 | 0.0 | 0.0 |
| 00:20 | 0.0 | 0.0 |
| ... | ... | ... |
| 12:00 | 250.0 | 5,000.0 |
| ... | ... | ... |
| 23:50 | 0.0 | 0.0 |

# FIG. 9

| Time | Power generation coefficient |
|------|------------------------------|
| 00:00 | 0.0 |
| 00:10 | 0.0 |
| 00:20 | 0.0 |
| ... | ... |
| 12:00 | 20.0 |
| ... | ... |
| 23:50 | 0.0 |

# F I G. 10

| Item | Value | Remarks |
|------|-------|---------|
| Date | 2013-01-15 | Estimation day |
| Latitude | 34.38 | PV panel installation location |
| Longitude | 135.00 | PV panel installation location |
| Tilt angle | 45° from horizontal plane | PV panel installation orientation |
| Azimuth | South | PV panel installation orientation |

# F I G. 11

| Date | Time | Solar irradiance $[W/m^2]$ |
|------|------|----------------------------|
| 2013-01-15 | 00.00 | 0.0 |
| 2013-01-15 | 00.10 | 0.0 |
| 2013-01-15 | 00.20 | 0.0 |
| ... | ... | ... |
| 2013-01-15 | 12.00 | 250.0 |
| ... | ... | ... |
| 2013-01-15 | 23.50 | 0.0 |

# F I G. 12

| Time | Power generation amount[Wh] |
|------|------|
| 00:00 | 0.0 |
| 00:10 | 0.0 |
| 00:20 | 0.0 |
| ••• | ••• |
| 12:00 | 20,000.0 |
| ••• | ••• |
| 23:50 | 0.0 |

FIG. 13

| Item | Value | Remarks |
|------|-------|---------|
| Power generation coefficient | 20.00 | — |

FIG. 14

611

Coefficient optimization unit

Solar irradiance
(actual value)

Power generation
amount
(actual value)

512

Data
extraction unit

513

Peak
calculation unit

514

Coefficient
calculation unit

Power
generation
coefficient

615

Sample
optimization
unit

F I G. 15

615

Sample optimization unit

Solar irradiance
(actual value)

Power generation
coefficient

Power generation
amount
(actual value)

642

Power
generation
amount
calculation
unit

643

Error
calculation unit

644

Extraction
day count
calculation
unit

Number of
extraction days

F I G. 16

F I G. 17

EP 3 012 969 A1

711

Coefficient optimization unit

Solar irradiance
(actual value)

Power generation
amount
(actual value)

| 512 | 513 | 514 | 715 |
|---|---|---|---|
| Data extraction unit | Peak calculation unit | Coefficient calculation unit | Correction unit |

Power generation coefficient

615

Sample optimization unit

Power generation coefficient database — 731

F I G. 18

715

Correction unit

752                            753

Power generation
coefficient
→ Storage unit → Correction
coefficient
application unit
→ Power generation
coefficient

Power generation
coefficient database ~731

# F I G. 19

Example of database

| Month | 0:00 | 1:00 | ••• | 12:00 | ••• | 23:00 |
|---|---|---|---|---|---|---|
| January | 0.0 | 0.0 | | 20.0 | | 0.0 |
| February | 0.0 | 0.0 | | 21.0 | | 0.0 |
| | | | | | | |
| December | 0.0 | 0.0 | | 18.0 | | 0.0 |

# F I G. 20

| 2010 | 0:00 | 1:00 | ••• | 12:00 | ••• | 23:00 |
|---|---|---|---|---|---|---|
| January | 0.0 | 0.0 | | 20.0 | | 0.0 |
| February | 0.0 | 0.0 | | 21.0 | | 0.0 |
| | | | | | | |
| December | 0.0 | 0.0 | | 18.0 | | 0.0 |

| 2011 | 0:00 | 1:00 | ••• | 12:00 | ••• | 23:00 |
|---|---|---|---|---|---|---|
| January | 0.0 | 0.0 | | 20.0 | | 0.0 |
| February | 0.0 | 0.0 | | 21.0 | | 0.0 |
| | | | | | | |
| December | 0.0 | 0.0 | | 18.0 | | 0.0 |

| 2012 | 0:00 | 1:00 | ••• | 12:00 | ••• | 23:00 |
|---|---|---|---|---|---|---|
| January | 0.0 | 0.0 | | 20.0 | | 0.0 |
| February | 0.0 | 0.0 | | 21.0 | | 0.0 |
| | | | | | | |
| December | 0.0 | 0.0 | | 18.0 | | 0.0 |

$\vdots$

# F I G. 21

**EP 3 012 969 A1**

<div style="text-align:center">

**INTERNATIONAL SEARCH REPORT**

</div>

| | International application No. |
|---|---|
| | PCT/JP2013/084668 |

**A. CLASSIFICATION OF SUBJECT MATTER**

*H02S10/00*(2014.01)i, *G06Q50/06*(2012.01)i, *H02J3/00*(2006.01)i

According to International Patent Classification (IPC) or to both national classification and IPC

**B. FIELDS SEARCHED**

Minimum documentation searched (classification system followed by classification symbols)
H02S10/00-50/15, G06Q50/06, H02J3/00, H01L31/04-31/078, 31/18-31/20, 51/42-51/48

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2012-124188 A (Hitachi, Ltd.),<br>28 June 2012 (28.06.2012),<br>paragraphs [0006], [0013], [0031], [0036],<br>[0045], [0055]<br>(Family: none) | 1-2,4-12,<br>14-15,17-23<br>3,13,16 |
| X<br>Y | JP 2012-44740 A (The Tokyo Electric Power Co.,<br>Inc.),<br>01 March 2012 (01.03.2012),<br>paragraphs [0039] to [0046]<br>(Family: none) | 1-2,4-12,<br>14-15,17-23<br>3,13,16 |
| X<br>Y | JP 2011-142790 A (Fuji Electric Co., Ltd.),<br>21 July 2011 (21.07.2011),<br>paragraphs [0014], [0017], [0045], [0065] to<br>[0070]<br>(Family: none) | 1-23<br>3,13,16 |

| ☐ Further documents are listed in the continuation of Box C. | ☐ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>13 February, 2014 (13.02.14) | Date of mailing of the international search report<br>11 March, 2014 (11.03.14) |
|---|---|
| Name and mailing address of the ISA/<br>Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012124188 A

- JP 2011124287 A

**Non-patent literature cited in the description**

- **ERBS.** Estimation of the diffuse radiation fraction for hourly, daily, and monthly average global radiation. *Solar Energy,* 1982, vol. 28 (4), 293-302